# EUROPEAN PATENT SPECIFICATION

(11) **EP 1 575 819 B1**
(45) Date of publication and mention of the grant of the patent: **19.12.2007**
(21) Application number: 03780670.0
(22) Date of filing: 16.12.2003
(51) Int. Cl.: B62D 25/16

(54) **MUDGUARD FOR MOTOR VEHICLES HAVING QUICK COUPLING/RELEASE FIXING MEANS**
SCHUTZBLECH FÜR EINEN FAHRZEUG MIT SCHNELL LÖSBAREN BEFESTIGUNGEN
GARDE-BOUE POUR VEHICULES A MOTEUR COMPRENANT UN MOYEN DE FIXATION A MONTAGE/DEMONTAGE RAPIDE

(30) Priority: 23.12.2002 IT RM20020643
(43) Date of publication of application: 21.09.2005
(73) Proprietor: Domar S.r.l., 70022 Altamura (BA) (IT)
(72) Inventor: LORUSSO, Lorenzo, I-70022 Altamura (IT)
(74) Representative: Capasso, Olga
(86) International application number: PCT/IT2003/000821
(87) International publication number: WO 2004/056640

(56) References cited:
- EP-A- 0 619 217
- EP-A- 1 020 346
- GB-A- 2 365 396
- US-A- 6 152 469

## Description

The present invention relates to the field of carriage, and particularly motor vehicles for the transport of goods such as motor lorries or trucks, in which the rear wheels are provided as known with mudguards of metal sheet or stiff plastic material which are secured to the frame by ring means tightened by screws or bolts to suitable, generally elongated (solid or hollow) members integral with the frame.

The present mudguards described herein are installed by screwing first the relative support means to the mudguards and then tightening such support means to rods or support means integral with the frame of the truck. Such installation requires obviously a long time and is difficult especially if electric tools or screwdrivers are not available.

Moreover, the current mudguards require a particularly difficult, complex disassembling which should conversely be very easy in case it is necessary to change a wheel especially along the roadway where handy tools used by mechanicians are not available.

It should also be noted that the mudguards of trucks are necessarily positioned close to the wheels to ensure the maximum efficiency. Such closeness, however, strongly hampers the manual operations to replace a wheel which could be much easier if the mudguard were missing or temporarily disassembled. Such disassembling, although useful to replace the wheel, is never carried out just because of its heaviness.

It is also known, from EP619217 corresponding to the preamble of claim 1, a mudguard (5) for commercial vehicles to be suitable as a side panel for all types of vehicles construction, such as platform lorries, high-capacity vehicles, interchangeable-body lorries and articulated vehicles. The object of EP619217 is achieved by virtue of the fact that the mudguard is formed from self-supporting panel elements. Hence, mudguards are not actually secured to the vehicle frame and therefore they are not affected by the design of the frame, for example, as regards the length to be paneled. A draw-back of EP 619217 consists in that neither said side panel, nor the mudguards to which they are fixed, as provided with easy-to-use couple/release means for their quick assembly."

The main object of the present invention is to overcome the problems mentioned above by providing a mudguard provided with coupling means to fix it to the frame including quick coupling/release fixing means.

This has been accomplished by providing a mudguard comprising the features disclosed in claim 1 and in particular one or more means to couple the support members (integral with the frame of the vehicle) to the mudguard and means to snap-couple/release quickly the mudguard to such support means.

A better understanding of the invention will follow from the following detailed description with reference to the accompanying drawings that show only by way of a not limiting example a preferred embodiment thereof. In the drawings:
Figure 1 is an exploded view showing the mudguard according to the invention and all relative assembling members for its coupling to the support rod integral with the frame of the vehicle;
Figure 2 is a perspective view of the portion relative to the connection between the snap-coupling/release means and the support rod as well as the fitting of the latter into its housing in the mudguard body;
Figures 3 and 4 show three-dimensional particulars relative to the opposite end of the support rod housing, of the hidden lower side and visible upper side of the mudguard, respectively;
Figures 5 and 6 are perspective, front and back views of the end plug which is applied to each mudguard support rod to provide the removable snap-fastening thereof ;

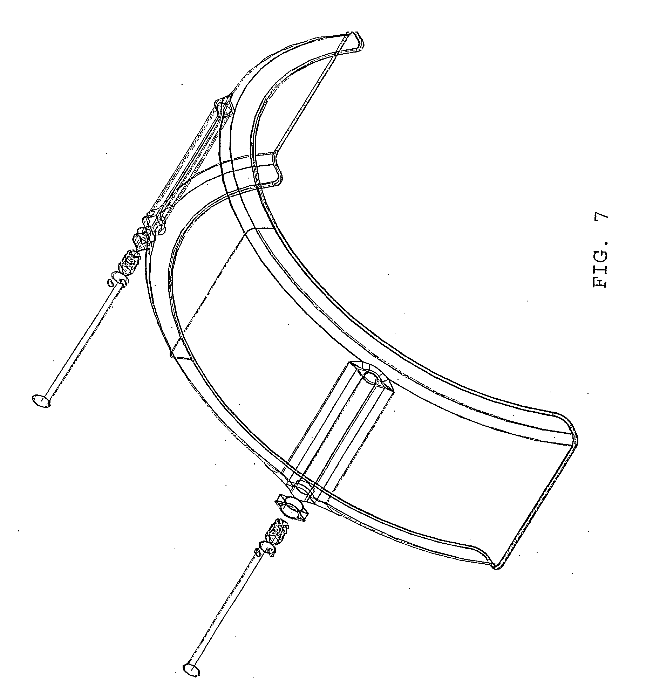

Figure 7, similar to Figure 1, shows in greater detail the several parts of the invention;

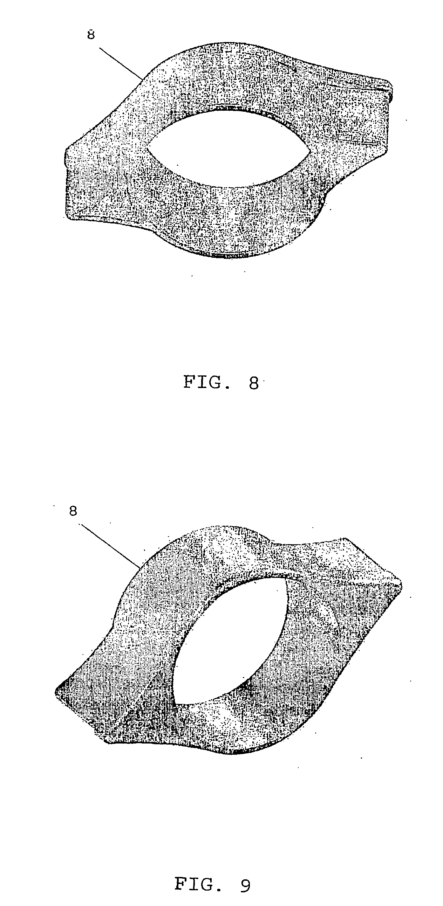

Figures 8 and 9 are perspective, front and back views of the guide and centering bush which is placed inside the support rod housings.

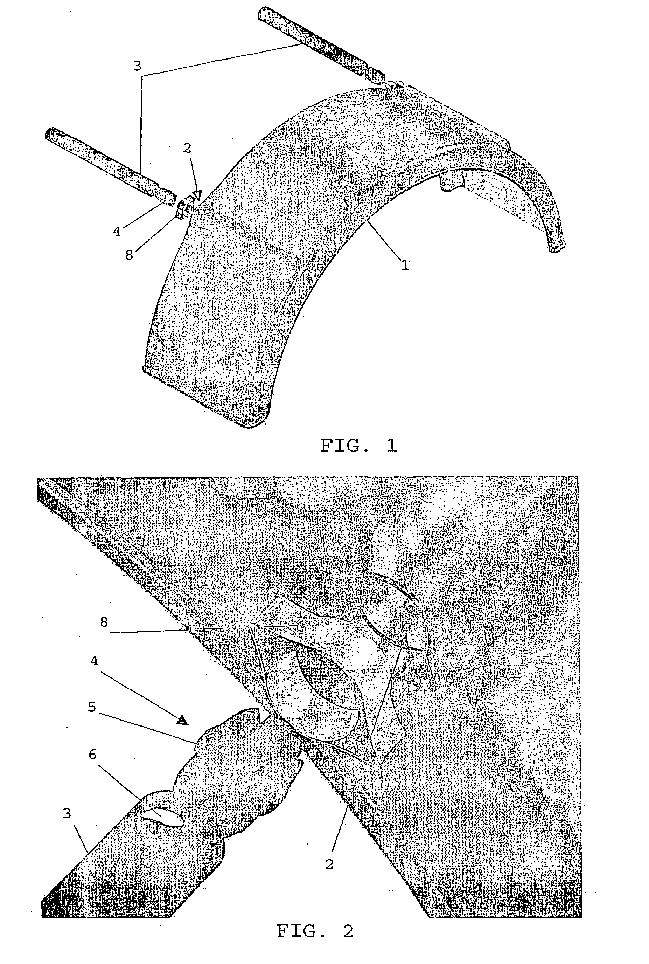

Referring particularly to Figures 1 and 2 the preferred embodiment has a mudguard of plastic material including a main body 1 provided preferably with two generally cylindrical housings or recesses 2 formed crosswise thereto and facing the support transversal rods 3 integral with the frame of the vehicle and means 4 for coupling/releasing quickly the mudguard to/from (preferably tubular) support rods 3, which means 4 is preferably placed at the free ends of rods 3.

Support rods 3 and relative housings 2 are generally parallel to the axis of the wheel.

According to a peculiar feature of the invention, such quick snap-coupling/release means 4 consists of a sort of "plug" of resistant elastic material which is applied to the free end of each support rod 3 so that as the main body of mudguard 1 is inserted in its position of use, such "plug" reaches and comes out of the output end of the tubular housing 2, and its teeth or "prongs" can snap-spread, thus preventing the plug from entering again accidentally into housing 2 of the mudguard.

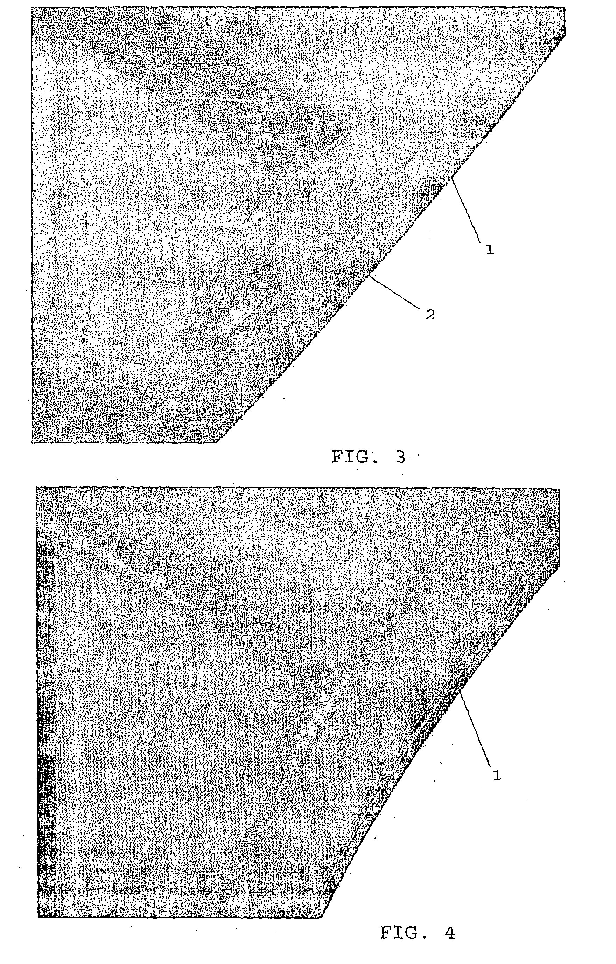

With reference to Figures 3 and 4 showing in particular the output end of a housing 2 of a support rod 3, it should be noted that the output opening of housing 2 of rod 3 can be seen only from the inside of the mudguard, while only the shape of the housing can be seen from the outside thereof, such housing being formed in the body of the mudguard with a suitable local increase in the thickness.

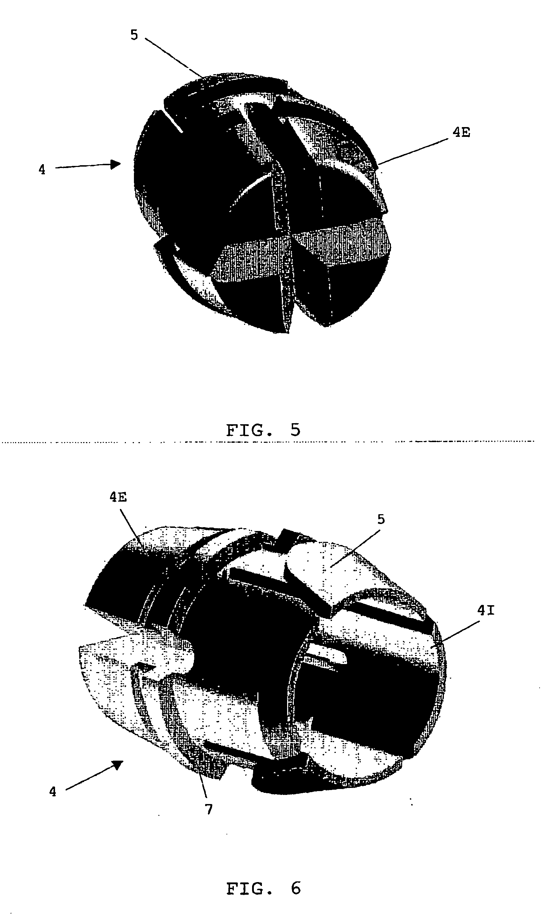

Turning now to the end plug 4 shown clearly in Figures 5 and 6, it should be appreciated that it consists essentially of a hollow body with a dead bottom 4E able to snap-come out of housing 2 of the mudguard body 1, while the opposite end 4I is able to be snap-fitted into the open end of a support rod 3 of the mudguard. This second end 4I of plug 4 is provided with quick coupling/release means consisting of one or more tongues 5 disposed symmetrically along the periphery of the plug, said tongues 5 being able to snap-fit into suitable slots or holes 6 formed in the vicinity of the free ends of support rods 3 until they abut against a suitable peripheral shoulder 7 that projects radially from the body of the plug. As tongues 5 are fitted into corresponding slots 6 and abut against such shoulder 7, then they also block axially plug 4 relative to respective rod 3.

After having positioned plug 4 into the corresponding rods 3, it is possible according to the present invention to secure mudguard 1 to the vehicle just by fitting it into the above-mentioned support rods 3 until plugs 4 reach the bottom of housings 2 of the rods and partially come out therefrom with their free end 4E, thus abutting against the opposite side of shoulder 7 described above. Once at the outside, the free end 4E spreads to the radial direction so as to block axially mudguard 1 with respect to support rod 3.

In the embodiment shown plug end 4E, that snap-fits axially into the mudguard at the end of housing 2 as mentioned above, consists of an elastic frustum conical body which deforms elastically by getting narrower radially to cross the end hole of housing 2 which has a lower diameter than that of the housing, and to become wider again up to the initial size so as to be axially blocked.

In the described embodiment the input opening of housing 2, through which support rod 3 in inserted when the mudguard is installed, is preferably provided with a guide centering bush 8 for the rod which guides the rod during the insertion inside its housing 2. The presence of guide bush 8 described above is advisable as housing 2 of support rod 3 has a draft to ease its withdrawal from the die after moulding.

From the foregoing it is evident that advantageously when it is necessary to disassemble the mudguard from the vehicle according to the invention, no tool is needed but it is sufficient to press the dead end 4E of plug 4 to disconnect the mudguard from the relative support rod so as to take it without further difficulty.

It should also be appreciated that according to the present invention dead plug 4 prevents the dirt from entering support rod 3 so as to keep always effective the quick snap-coupling/release system that otherwise could be blocked by the mud which hardens inside the plug.

It should at last be noted that according to a simplified variation of the invention there could also be provided two supports which are generally similar to those currently used, the first of which (the inside support which is nearer to the frame of the vehicle) acts as a guide for the support rod, and the second (the outside support) is provided with the quick snap-coupling/release system described above.

The present invention has been described and illustrated according to a preferred embodiment thereof, however, it should be understood that anyone skilled in the art can make technically and/or functionally equivalent modifications and/or replacements without departing from the scope of the present industrial invention, as defined in the annexed claims.

## Claims

1. A mudguard system for motor vehicles having support members (3) integral with the frame of the vehicle, comprising: - a mudguard (1) provided with one or more housings (2) formed as crosswise recess in the body of the mudguard for coupling support members (3) to the mudguard (1); and - snap coupling/releasing means (4) to quickly couple/release the mudguard (1) to/from said support members (3) of the vehicle, **characterized in that** said snap coupling/releasing means (4) consists of a "plug" of resistant elastic material having teeth or "prongs", which is applied to the free end of each support member (3) so that as the main body of mudguard (1) is inserted in its position of use, such "plug" reaches and comes out of the output end of the housing (2), and its teeth or "prongs" can snap-spread, thus preventing the plug from entering again accidentally into housing (2) of the mudguard.

2. The mudguard for motor vehicles according to claim 1 **characterized in that** said support members (3) are rods.

3. The mudguard for motor vehicles according to claim 2 **characterized in that** said rods are tubular.

4. The mudguard for motor vehicles according to the preceding claims **characterized in that** said snap coupling/releasing means (4) are placed at the free ends of supporting members (3).

5. The mudguard for motor vehicles according to the preceding claim, **characterized in that** the output opening of housing (2) of supporting members (3) is located so that it can only be seen from the inside of the mudguard, while only the shape of the housing can be seen from the outside thereof, such housing being formed in the body of the mudguard with a suitable local increase in the thickness .

6. The mudguard for motor vehicles according to claim 4 or 5, **characterized in that** the end plug of said snap/coupling releasing means (4) consists essentially of a hollow body with a dead bottom (4E) able to snap-come out of housing (2) of the mudguard body (1), while the opposite end (4I) is able to be snap-fitted into the open end of the supporting member (3).

7. The mudguard for motor vehicles according to the preceding claims, **characterized in that** said opposite end (4I) of snap/coupling releasing means (4) is provided with quick coupling/release means consisting of one or more tongues (5) disposed symmetrically along its periphery, said tongues (5) being able to snap-fit into suitable slots or holes (6) formed in the vicinity of the free ends of the supporting members (3) until they abut against a suitable peripheral shoulder (7) that projects radially from the body of the plug, thus blocking axially each snap/coupling releasing mean relative to the respective supporting member (3).

8. The mudguard for motor vehicles according to claims 6 or 7, **characterized in that** the dead bottom (4E) consists of an elastic frustum conical body which deforms elastically by getting narrower radially to cross the end hole of housing (2) which has a lower diameter than that of the housing, and to become wider again up to the initial size so as to be axially blocked.

9. The mudguard for motor vehicles according to any of preceding claims, **characterized in that** the input opening of housing (2), is provided with a guide centering bush (8) for guiding the support member (3) during the insertion inside its housing (2).

10. The mudguard for motor vehicles according to any of preceding claims, **characterized in that** supporting members (3) are provided with two ring supports to secure them to the frame of the vehicle, the former being nearer to the frame of the vehicle and acts as a guide for support member (3), and the latter being provided with said quick snap-coupling/release means (4).

## Patentansprüche

1. Kotflügelsystem für Motorfahrzeuge mit Stützgliedern (3), die mit dem Gestell des Fahrzeugs einstückig ausgebildet sind, umfassend:
- einen Kotflügel (1), der mit einem oder mehreren Gehäusen (2) bereitgestellt ist, die als quergerichtete Aussparung in dem Körper des Kotflügels zum Verbinden der Stützglieder (3) mit dem Kotflügel (1) ausgebildet sind; und
- Schnappverbindungs-/-lösemittel (4), um den Kotflügel (1) mit den Stützgliedern (3) des Fahrzeugs schnell zu verbinden und davon zu lösen, **dadurch gekennzeichnet, dass** die Schnappverbindungs-/-lösemittel (4) aus einem "Zapfen" aus widerstandsfähigem elastischen Material mit Zähnen oder "Zacken" besteht, der an dem freien Ende jedes Stützgliedes (3) derart angebracht wird, dass, während der Hauptkörper des Kotflügels (1) in seine Benutzungsposition eingesetzt wird, dieser "Zapfen" das Ausgangsende des Gehäuses (2) erreicht und dort herauskommt und seine Zähne oder "Zacken" herausschnappen können, wodurch verhindert wird, dass der Zapfen versehentlich erneut in das Gehäuse (2) des Kotflügels eintritt.

2. Kotflügel für Motorfahrzeuge nach Anspruch 1, **dadurch gekennzeichnet, dass** die Stützglieder (3) Stangen sind.

3. Kotflügel für Motorfahrzeuge nach Anspruch 2, **dadurch gekennzeichnet, dass** die Stangen röhrenförmig sind.

4. Kotflügel für Motorfahrzeuge nach den vorhergehenden Ansprüchen, **dadurch gekennzeichnet, dass** die Schnappverbindungs-/-lösemittel (4) an den freien Enden der Stützglieder (3) angeordnet sind.

5. Kotflügel für Motorfahrzeuge nach dem vorhergehenden Anspruch, **dadurch gekennzeichnet, dass** die Ausgangsöffnung von Gehäuse (2) der Stützglieder (3) derart angeordnet ist, dass sie bezüglich des Kotflügels nur von innen zu sehen ist, während nur die Form des Gehäuses von außen zu sehen ist, wobei dieses Gehäuse in dem Körper des Kotflügels mit einer angemessenen lokalen Erhöhung bezüglich der Dicke ausgebildet ist.

6. Kotflügel für Motorfahrzeuge nach Anspruch 4 oder 5, **dadurch gekennzeichnet, dass** der Endzapfen der Schnappverbindungs-/-lösemittel (4) im Wesentlichen aus einem hohlen Körper mit einem unzugänglichen unteren Ende (4E) besteht, der aus dem Gehäuse (2) des Kotflügelkörpers (1) herausschnappen kann, während das entgegengesetzte Ende (4I) in das offene Ende des Stützgliedes (3) einschnappen kann.

7. Kotflügel für Motorfahrzeuge nach den vorhergehenden Ansprüchen, **dadurch gekennzeichnet, dass** das entgegengesetzte Ende (4I) der Schnappverbindungs-/-lösemittel (4) mit schnellen Verbindungs-/Lösemitteln bereitgestellt ist, die aus einer oder mehreren Zungen (5) bestehen, die entlang seines Umfangs symmetrisch angeordnet sind, wobei die Zungen (5) in geeignete Schlitze oder Löcher (6) einschnappen können, die in der Nähe der freien Enden der Stützglieder (3) ausgebildet sind, bis sie an eine geeignete periphere Schulter (7) grenzen, die radial aus dem Körper des Zapfens hervorsteht, wodurch jedes Schnappverbindungs-/-lösemittel bezüglich des entsprechenden Stützgliedes (3) axial blockiert wird.

8. Kotflügel für Motorfahrzeuge nach Anspruch 6 oder 7, **dadurch gekennzeichnet, dass** das unzugängliche untere Ende (4E) aus einem elastischen kegelstumpfförmigen Körper besteht, der sich elastisch verformt, indem er radial schmaler wird, um das Endloch des Gehäuses (2) zu durchqueren, das einen kleineren Durchmesser aufweist als das des Gehäuses, und bis zu seiner Ausgangsgröße wieder breiter zu werden, so dass er axial blockiert wird.

9. Kotflügel für Motorfahrzeuge nach den vorhergehenden Ansprüchen, **dadurch gekennzeichnet, dass** die Eingangsöffnung des Gehäuses (2) mit einer Führungszentrierbuchse (8) bereitgestellt ist, um das Stützglied (3) während der Einsetzung in das Gehäuse (2) zu führen.

10. Kotflügel für Motorfahrzeuge nach den vorhergehenden Ansprüchen, **dadurch gekennzeichnet, dass** die Stützglieder (3) mit zwei Ringträgern bereitgestellt sind, um sie an dem Gestell des Fahrzeugs zu befestigen, wobei sich der erste näher bei dem Gestell des Fahrzeugs befindet und als eine Führung für das Stützglied (3) fungiert und der letzte mit den schnellen Schnappverbindungs-/-lösemitteln (4) bereitgestellt ist.

## Revendications

1. Système de garde-boue pour véhicules à moteur, possédant des éléments de support (3) faisant partie intégrante avec le cadre du véhicule, comprenant les éléments suivants :
Un garde-boue (1) équipé d'un ou de plusieurs logements (2) formés comme des renfoncements en croix dans le corps du garde-boue pour pouvoir accoupler les éléments de support (3) avec le garde-boue (1) ; et
Des moyens d'accouplement / de désaccouplement par encliquetage (4) pour accoupler / désaccoupler rapidement le garde-boue (1) par rapport auxdits éléments de support (3) du véhicule, **caractérisé en ce que** ledit moyen d'accouplement / de désaccouplement par encliquetage (4) consiste en un « bouchon » constitué d'un matériau élastique résistant possédant des dents ou des « griffes », qui est appliqué à l'extrémité libre de chaque élément de support (3), si bien que lorsque le corps principal du garde-boue (1) est introduit dans sa position d'utilisation, ledit « bouchon » atteint et sort de l'extrémité finale du logement (2), et ses dents ou « griffes » peuvent s'écarter rapidement, empêchant ainsi le bouchon de revenir accidentellement dans le logement (2) du garde-boue.

2. Garde-boue pour véhicules à moteur selon la revendication 1, **caractérisé en ce que** lesdits éléments de support (3) sont conçus comme des tiges.

3. Garde-boue pour véhicules à moteur selon la revendication 2, **caractérisé en ce que** lesdites tiges sont tubulaires.

4. Garde-boue pour véhicules à moteur selon les précédentes revendications, **caractérisé en ce que** lesdits moyens d'accouplement / de désaccouplement par encliquetage (4) se trouvent au niveau des extrémités libres des éléments de support (3).

5. Garde-boue pour véhicules à moteur selon la précédente revendication, **caractérisé en ce que** l'ouverture de sortie du logement (2) des éléments de support (3) est située de façon à ce qu'elle soit visible seulement depuis l'intérieur du garde-boue, pendant que seule la forme du logement est visible depuis l'extérieur, ledit logement étant formé dans le corps du garde-boue avec une épaisseur correspondante localement croissante.

6. Garde-boue pour véhicules automobiles selon la revendication 4 ou 5, **caractérisé en ce que** le bouchon final dudit moyen d'accouplement / de désaccouplement par encliquetage (4) consiste essentiellement en un corps creux avec un point mort bas (4E), capable de ressortir du logement (2) du corps de garde-boue (1) en s'écartant rapidement, tandis que l'extrémité opposée (4I) peut être emboîtée par enclenchement dans l'extrémité ouverte de l'élément de support (3).

7. Garde-boue pour véhicules à moteur selon les précédentes revendications, **caractérisé en ce que** ladite extrémité opposée (4I) dudit moyen d'accouplement / de désaccouplement par encliquetage (4) est équipée de moyens d'accouplement / de désaccouplement rapides consistant en une ou plusieurs langues (5) disposées de manière symétrique le long de sa périphérie, lesdites langues (5) pouvant être encliquetées dans des fentes ou dans des trous (6) formés à proximité des extrémités libres des éléments de support (3) jusqu'à ce qu'elles butent contre une épaule périphérique appropriée (7) qui se projette radialement du corps de bouchon, bloquant ainsi de façon axiale chaque moyen d'accouplement / de désaccouplement rapide par rapport à l'élément de support (3) respectif.

8. Garde-boue pour véhicules à moteur selon la revendication 6 ou 7, **caractérisé en ce que** le point mort du bas (4E) consiste en un corps élastique en tronc de cône, qui se déforme de manière élastique en devenant radialement plus étroit pour pouvoir traverser le trou final du logement (2), qui possède un diamètre inférieur à celui du logement, et en redevant plus large, jusqu'à reprendre sa taille initiale de façon à être bloqué de façon axiale.

9. Garde-boue pour véhicules à moteur selon l'une quelconque des précédentes revendications, **caractérisé en ce** l'ouverture d'entrée du logement (2) est équipée d'une bague de centrage et de guidage (8) permettant de guider l'élément de support (3) pendant son introduction dans le logement (2).

10. Garde-boue pour véhicule à moteur selon l'une quelconque des précédentes revendications, **caractérisé en ce que** les éléments de support (3) sont pourvus de deux supports annulaires permettant de les sécuriser par rapport au cadre du véhicule, ces derniers se trouvant plus près du cadre du véhicule, et agissant comme un guide pour les éléments de support (3) qui comportent lesdits moyens d'accouplement / de désaccouplement rapide (4).
